(19) Europäisches Patentamt
European Patent Office
Office européen des brevets

(11) EP 1 403 300 B1

(12) **EUROPÄISCHE PATENTSCHRIFT**

(45) Veröffentlichungstag und Bekanntmachung des Hinweises auf die Patenterteilung:
**03.01.2007 Patentblatt 2007/01**

(51) Int Cl.:
***C08G 18/42*** *(2006.01)* ***C08G 18/61*** *(2006.01)*
***C08G 18/79*** *(2006.01)* ***C14C 11/00*** *(2006.01)*

(21) Anmeldenummer: **03019661.2**

(22) Anmeldetag: **08.09.2003**

(54) **Polyisocyanatharze**

Polyisocyanate resins

Résines de polyisocyanates

(84) Benannte Vertragsstaaten:
**DE ES IT**

(30) Priorität: **20.09.2002 DE 10243667**

(43) Veröffentlichungstag der Anmeldung:
**31.03.2004 Patentblatt 2004/14**

(73) Patentinhaber: **LANXESS Deutschland GmbH**
**51369 Leverkusen (DE)**

(72) Erfinder:
- **Hassel, Tillmann, Dr.**
  **50259 Pulheim (DE)**
- **Müller, Friedhelm**
  **51379 Leverkusen (DE)**
- **Klippert, Uwe**
  **51399 Burscheid (DE)**

(56) Entgegenhaltungen:
**EP-A- 0 336 205** **EP-A- 0 646 608**
**EP-A- 0 841 358**

EP 1 403 300 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft neue Polyisocyanatharze, ein Verfahren zu ihrer Herstellung und deren Verwendung, insbesondere als Vernetzer bei der Herstellung von Lackledern.

Die Herstellung von Lackledern mit Polyurethanlacken ist bekannt; s. z.B. Das Leder 4 (10) S. 234 ff (1953); EP-A 349 858; Kunststoff-Handbuch, Bd. 7, "Polyurethane", 3. Auflage, Carl Hanser Verlag, München / Wien 1993; 637 f.

Verwendet werden vornehmlich 2-Komponenten-Lacke, bestehend aus Lösungen polyfunktioneller Isocyanate und polyfunktioneller hydroxylgruppenhaltiger Weichharze (Polyester) in organischen Lösemitteln. Dabei wird ein bedeutender Isocyanatüberschuss verwendet. Die Komponenten werden gemischt und auf das entsprechend grundierte Leder durch Gießen oder Spritzen appliziert. Danach werden die lackierten Leder über mehrere Stunden bei mäßig erhöhter Temperatur (40 bis 50°C) getrocknet, wobei sich der vernetzte Lack bildet. Als Polyisocyanate werden in der Regel höherfunktionelle Polyisocyanate der aromatischen Reihe, hergestellt aus den entsprechenden Diisocyanaten durch Umsetzung mit niedermolekularen Polyolen/Polyolmischungen oder durch Trimerisierung eingesetzt.

Durch Einsatz geeigneter Mischtrimerisate und Siloxanmodifizierung kann die Lichtechtheit und das Knickbruchverhalten des Lacks verbessert werden (vgl. EP-A 841 358). Polyisocyanate der rein aliphatischen Reihe werden als Vernetzer in der Lackierung von Leder nicht eingesetzt, weil unter den technischen Bedingungen der Lederlackierung und bei den bei diesen Systemen üblichen hohen Einsatzmengen an Vernetzern derartige Polyisocyanate nicht in ausreichendem Masse abreagieren, so dass Probleme wie zu weicher Lack und vor allem Stapelklebrigkeit auftreten, was für den Einsatz prohibitiv ist. Die Verwendung von Reaktionsbeschleunigern zur Lösung dieser Probleme ist aus Topfzeitgründen unter den Bedingungen der Lacklederherstellung nicht möglich.

Um bessere Thermosettingechtheiten der lackierten Leder zu erhalten werden auch urethangruppenhaltige hydroxylfunktionelle Polyester eingesetzt (EP-A 349 858). Derartige Lackleder weisen bei Normaltemperatur ein - angesichts der in der Regel hohen Schichtdicke des Lacks - bemerkenswert gutes Knickbruchverhalten auf. Sie zeigen Schwächen im Kälteknickverhalten.

Aus der EP-A 336 205 sind spezielle polyestermodifizierte isocyanuratgruppenhaltige Polyisocyanatharze mit ausschließlich aliphatisch gebundenen Isocyanat- und Isocyanuratgruppen bekannt. Diese Harze werden in Kombination mit hydroxylgruppenhaltigen Polyacrylaten in 2-K Lacken für die Kunststofflackierung eingesetzt. Sie geben bei Alleineinsatz als Vernetzer hochelastische Lacke.

In der Schuhindustrie sind die Anforderungen an das Kälteknickverhalten von Lackledern kontinuierlich gestiegen. Es ist die Situation eingetreten, dass diese gestiegenen Anforderungen von den Lacken des Standes der Technik nicht mehr zuverlässig erfüllt werden.

Es stellte sich deshalb die Aufgabe, Systeme zur Lackierung von flexiblen Substraten, insbesondere Leder zur Verfügung zu stellen, die mit dem in den Lederfabriken vorhandenem Equipment eingesetzt werden können und die verbessertes Kälteknickverhalten aufweisen, wobei alle anderen Anforderungen an die Lackleder bezüglich Herstellung, sonstiger physikalischen Echtheiten, Aspekt und Verarbeitbarkeit unverändert gültig bleiben sollten.

Diese Aufgabe wird mit der vorliegenden Erfindung gelöst.

Es wurde gefunden, dass eine spezielle Polyisocyanatharzmischung zu einer erheblichen Verbesserung des Kälteknickverhaltens derart vernetzter Lackierungen, insbesondere Lederlackierungen führt, ohne dass die bereits erwähnten - für die Herstellung und Verarbeitung von Lackledern bevorzugten - sonstigen Parameter nachteilig beeinflusst werden.

Gegenstand der Erfindung ist daher eine Polyisocyanatharzmischung, enthaltend

A) wenigstens ein urethan- und/oder isocyanurathaltiges, Estergruppen-freies Polyisocyanat enthaltend aromatisch gebundene und gegebenenfalls aliphatisch gebundene NCO-Gruppen mit

- einem NCO-Gehalt von 10-30 Gew.-%, bevorzugt 15 - 25 Gew.-% bezogen auf das Polyisocyanat A),
- einer mittleren NCO-Funktionalität von größer/gleich 2,1, insbesondere von 2,1-6, bevorzugt 2,3-4, besonders bevorzugt 2,5-3,5 und
- einer mittleren Molmasse (Zahlenmittel) <800 g/mol und

B) wenigstens ein polyestermodifiziertes, isocyanuratgruppenhaltiges Polyisocyanat mit ausschließlich aliphatisch gebundenen NCO-Gruppen und Isocyanuratgruppen mit

- einem NCO-Gehalt von 7-18 Gew.-%, bevorzugt 10 - 15 Gew.-% bezogen auf das Polyisocyanat B),
- einem Isocyanuratgehalt (M = 126) von 8-20 Gew.-%, bevorzugt 9 - 15 Gew.-%, bezogen auf das Polyisocyanat

B),

- einem Polyestergehalt (gerechnet als Polyesterdiol) von 30 bis 50 Gew.-%, bevorzugt 35 - 45 Gew.-% bezogen auf das Polyisocyanat B),

wobei das zugrundeliegende Polyesterdiol eine mittlere Molmasse (Zahlenmittel) von 350-950 g/mol besitzt und aufgebaut ist aus

a) $C_2$-$C_{12}$-Dicarbonsäuren und/oder -Hydroxycarbonsäuren; bzw. deren Anhydriden und /oder inneren Estern; vorzugsweise Adipinsäure und/oder epsilon- Hydroxycapronsäure und

b) Diolen mit einer Molmasse von 62-300 g/mol, vorzugsweise 1,6-Hexandiol, besonders bevorzugt aufgebaut aus Hexandiol und ε-Caprolacton.

**Komponente A**

Die Polyisocyanate A) der erfindungsgemäßen Mischung sind als Urethangruppenhaltige Polyisocyanate vorzugsweise Umsetzungsprodukte aus aromatischen und gegebenenfalls aliphatischen Diisocyanaten und estergruppenfreien Polyolen. Bevorzugt werden ausschließlich aromatische Diisocyanate eingesetzt.

Sie werden vorzugsweise durch Reaktion der Polyole mit einem molarem Überschuss der Diisocyanate und anschließender destillativer Entfernung des nicht umgesetzten Diisocyanats hergerstellt.

Es können grundsätzlich alle Diisocyanate der aromatischen Reihe in diese Umsetzung eingesetzt werden, bevorzugt sind die Diisocyanate Diphenylmethandiisocyanat und Toluylendiisocyanat, die auch als Mischungen verwendbar sind. Bei den eingesetzten Diisocyanaten sind alle Stellungsisomeren in allen Mischungsverhältnissen verwendbar. Besonders bevorzugt wird Toluylendiisocyanat (TDI) eingesetzt, wobei ein TDI - Gemisch enthaltend mindestens 75 Gew.-% 2,4-Toluylendiisocyanat optimal ist. Als mögliche aliphatische Diisocyanate, die mitverwendet werden können, sind vorzugsweise Hexamethylendiisocyanat und Isophorondiisocyanat zu nennen.

Bei den Polyolen handelt es sich vorzugsweise um OH- di-, tri- bis hexafunktionelle Alkohole, wie sie zum Aufbau von Polyurethanen üblicherweise eingesetzt werden.

Bevorzugt werden aliphatische $C_2$-$C_6$-Polyole und Polyetherpolyole mit $C_2$-$C_6$; bevorzugt mit $C_2$-Einheiten. Beispielsweise seien genannt:

Ethylenglykol, Diethylenglykol, Triethylenglykol, 1,4-Butandiol, 1,6-Hexandiol, Trimethylolpropan, Glyzerin, Pentaerythrit.

Besonders bevorzugt sind di- und trifunktionelle Alkohole; insbesonders Diethylenglykol und Trimethylolpropan.

Zur Einstellung einer gewünschten NCO - Funktionalität können diese Polyole als Mischungen in die Umsetzung mit den entsprechenden Diisocyanaten eingesetzt werden.

Unter technischen Synthesebedingungen ist es unvermeidbar, dass bei dieser Umsetzung teilweise auch Kettenaufbau eintritt. Resultat dieser Umsetzung ist daher - selbst bei Einsatz nur eines Polyols - immer ein Produktgemisch, dessen Zusammensetzung in gewissen Grenzen durch das molare Verhältnis der Einsatzstoffe gesteuert werden kann und dessen mittlere NCO-Funktionalität höher ist, als es der OH-Funktionalität der eingesetzten Polyole oder Polyolmischungen entspricht. Nur bei Einsatz eines unendlichen Überschusses an Diisocyanat entspricht die NCO-Funktionalität des Reaktionsprodukts (nach Entfernen des Überschusses an eingesetztem Diisocyanat) der OH-Funktionalität des eingesetzten Polyols bzw. der eingesetzten Polyolmischung. In der Regel ist aber die tatsächliche NCO-Funktionalität des Reaktionsprodukts nur geringfügig höher als aus der OH-Funktionalität der eingesetzten Polyole bzw. Polyolmischungen errechnet werden kann.

Bei den erfindungsgemäß einzusetzenden Polyisocyanaten A) ist es in jedem Fall möglich, die tatsächliche mittlere NCO-Funktionalität durch Trennung des Reaktionsprodukts nach bekannten Methoden in dessen Einzelkomponenten und Charakterisierung der getrennten Komponenten zu bestimmen.

Die tatsächliche mittlere Funktionalität des Reaktionsprodukts kann dann nach folgender Beziehung

$$\frac{M1 \times F1 + M2 \times F2 + \ldots\ldots\ldots\ldots + M X \times FX}{M1 + M2 + \ldots\ldots\ldots\ldots + MX}$$

in der M1 bis MX für den Molenbruch der Einzelkomponenten 1 bis X und F1 bis FX für die Funktionalität der Einzelkomponenten 1 bis X steht errechnet werden.

Die isocyanuratgruppen-haltigen Polyisocyanate A) sind vorzugsweise Trimerisierungsprodukte von aromatischen und gegebenenfalls aliphatischen Diisocyanaten.

Die Isocyanuratgruppen im Polyisocyanat A) sind solche, wie sie in an sich bekannter Weise durch katalytisch induzierte (an)Trimerisierung aromatischer Diisocyanate, deren Mischungen untereinander oder deren Mischungen mit aliphatischen Diisocyanaten; Desaktivierung des Trimerisierungskatalysators und anschließender destillativer Entfernung der nicht umgesetzten Diisocyanate erhalten werden. Bei der Trimerisierung von Mischungen aromatischer mit aliphatischen Diisocyanaten entstehen sogenannte Mischtrimerisate mit eigebautem aliphatischem Anteil.

Bevorzugt wird hier Toluylendiisocyanat und dessen Mischungen mit aliphatischen Diisocyanaten wie Isophorondiisocyanat und Hexamethylendiisocyanat zur Trimerisierung eingesetzt, besonders bevorzugt sind Mischungen aus Toluylendiisocyanat, (enthaltend wenigstens 75 Gew.-% des 2,4-Isomeren) und Hexamethylendiisocyanat.

Derartige Isocyanurat-haltige Polyisocyanate wie sie zur Herstellung des Polyisocyanats A) vorzugsweise eingesetzt werden, haben eine NCO-Funktionalität von größer gleich 3, da aber bei der technischen Herstellung die anteilige Bildung von Mehrkernprodukten kaum zu unterdrücken ist, können deutlich höhere Funktionalitäten resultieren. Die tatsächliche Funktionalität kann wie bereits beschrieben bestimmt werden.

Polyisocyanate A), die Isocyanuratgruppen als auch Urethangruppen enthalten, werden vorzugsweise durch Mischen von isocyanurathaltige Polyisocyanaten A) und urethanhaltigen Polyisocyanaten A) erhalten.

**Komponente B)**

Die polyestermodifizierten, isocyanurathaltigen Polyisocyanatharze B) sind bereits teilweise aus EP-A 336 205 bekannt.

Bei den zur Herstellung des Polyisocyanats B) bevorzugt eingesetzten aliphatischen Diisocyanaten handelt es sich um organische Diisocyanate mit aliphatisch und/oder cycloaliphatisch gebundenen Isocyanatgruppen. Typische Beispiele sind 1,6-Diisocyanatohexan (HDI), 1-Isocyanato-3,3,5-trimethyl-5-isocyanatomethyl-cyclohexan (IPDI) oder 4,4-Diisocyanato-dicyclohexylmethan. Andere (cyclo)aliphatische Diisocyanate als HDI werden vorzugsweise als Abmischkomponente mit HDI verwendet. Dies bedeutet, dass es sich bei den erfindungsgemäß zum Einsatz gelangenden Ausgangsdiisocyanaten für die Komponente B) vorzugsweise um HDI oder um Gemische von HDI mit anderen (cyclo) aliphatischen Diisocyanaten der beispielhaft genannten Art handelt, wobei in den Gemischen vorzugsweise mehr als 30 Mol-%, insbesondere mehr als 70 Mol-% HDI vorliegen. Ganz besonders bevorzugt wird HDI als alleiniges Ausgangsdiisocyanat verwendet.

Die erfindungsgemäß als Ausgangsmaterialien einzusetzenden Diisocyanate können in technischer Reinheit verwendet werden. Ganz besonders bevorzugt wird jedoch ein von Kohlendioxid weitgehend befreites HDI als alleiniges Ausgangsdiisocyanat verwendet, da mit dessen Verwendung eine besonders schonend ablaufende Trimerisierungsreaktion unter Verwendung von minimalen Mengen an Katalysatoren möglich ist.

Das besonders bevorzugte als Ausgangsdiisocyanat zum Einsatz gelangende HDI weist bevorzugt einen Gehalt an Kohlendioxid von weniger als 20 ppm (Gewicht), vorzugsweise von weniger als 10 ppm (Gewicht) und besonders bevorzugt von weniger als 5 ppm (Gewicht) auf.

Technisches, durch Destillation gereinigtes HDI, wie es bislang auch zur Herstellung von Isocyanuratgruppen aufweisenden Polyisocyanaten eingesetzt wurde, weist beträchtliche Mengen (ca. 20 ppm bis 100 ppm (Gewicht)) an Kohlendioxid auf.

Kohlendioxid kann bei der Herstellung in das HDI gelangen, beispielsweise bei der Phosgenierung von Kohlensäuresalzen des Hexamethylendiamins. Es kann beim Lagern aus der Luft aufgenommen werden, und es kann durch chemische Reaktion der NCO-Gruppen, z.B. durch Carbodiimidbildung oder mit einer Spur Feuchtigkeit, entstehen. Frisch durch Vakuumdestillation gereinigtes HDI enthält nach 24 Stunden im verschlossenen Gefäß beispielsweise 40 ppm Kohlendioxid. Über einen Zeitraum von ca. 6 Monaten gelagertes HDI kann, falls das Gebinde während der Lagerzeit geöffnet wurde, bis zu 0,6 Gew.-% Kohlendioxid enthalten.

Die Entfernung von Kohlendioxid aus HDI kann durch Ausblasen mit Reinstickstoff oder Edelgas, zum Beispiel mit Argon, erfolgen, z.B. bei 0 - 70°C. Auch eine höhere Temperatur kann angewendet werden, bietet aber keine entscheidenden Vorteile.

Es ist natürlich ebenfalls möglich und stellt ebenfalls eine bevorzugte Variante dar, zunächst HDI mit einem höher als 20 ppm liegenden Gehalt an Kohlendioxid mit unterschüssigem Esterdiol erfindungsgemäß zu modifizieren, dann das gelöste Kohlendioxid weitgehend zu entfernen, und schließlich die Trimerisierungsreaktion durchzuführen.

Die Isocyanuratpolyisocyanatherstellung kann im Prinzip in völliger Analogie zu den bekannten Verfahren durchgeführt werden. Dies bedeutet insbesondere, dass die bekannten Trimerisierungskatalysatoren des Standes der Technik, wie sie beispielsweise in den unten genannten Literaturstellen empfohlen werden, verwendet werden können.

Vorzugsweise werden beim erfindungsgemäßen Verfahren quaternäre Ammoniumhydroxide als Katalysator eingesetzt. Grundsätzlich geeignet sind alle beliebigen quaternären Ammoniumhydroxide, wie sie bereits früher als Trimerisierungskatalysatoren für Isocyanatgruppen empfohlen worden sind. Geeignet sind beispielsweise die quaternären Ammoniumhydroxide gemäß US-A-3 487 080, Kolonne 2, Zeilen 10 bis 38 oder gemäß EP-A-10 589, Seite 6,

Zeile 5 bis Seite 8, Zeile 10. Gut geeignet sind auch Verbindungen der Formel

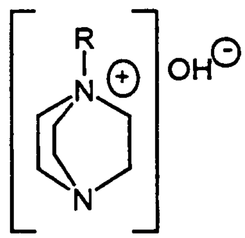

in welcher

R für einen Alkylrest mit 1 bis 20, vorzugsweise 1 bis 4 Kohlenstoffatomen, eine araliphatischen Kohlenwasserstoffrest mit 7 bis 10, vorzugsweise 7 Kohlenstoffatomen oder einen gesättigten cycloaliphatischen Kohlenwasserstoffrest mit 4 bis 10, vorzugsweise 5 bis 6 Kohlenstoffatomen, steht.

Zu den bevorzugten Katalysatoren gehören Verbindungen der allgemeinen Formel

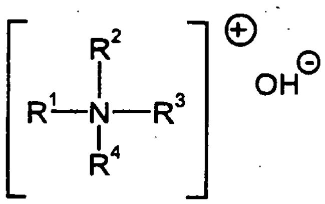

für welche

$R^1$, $R^2$ und $R^3$ für gleiche oder verschiedene Alkylreste mit 1 bis 18, insbesondere 1 bis 4 Kohlenstoffatomen, besonders bevorzugt für Methylgruppen stehen und

$R^4$ für einen Benzyl-, 2-Hydroxyethyl-, 2-Hydroxypropyl- oder einen 2-Hydroxybutyl-Rest steht.

Besonders bevorzugte Katalysatoren sind N,N,N-Trimethyl-N-benzylammoniumhydroxid und N,N,N-Trimethyl-N-(2-hydroxypropyl)-ammoniumhydroxid.

Die jeweils optimale Menge an Katalysator hängt von der Natur des Katalysators ab und kann mit Hilfe eines orientierenden Vorversuchs ermittelt werden. Die Menge des eingesetzten Katalysators liegt beim erfindungsgemäßen Verfahren, bezogen auf eingesetztes Ausgangsdiisocyanat im Allgemeinen unterhalb 1 Gew.-%. Bei Verwendung von HDI als Ausgangsdiisocyanat, welches entsprechend den oben gemachten Ausführungen weitgehend von Kohlendioxid befreit worden ist, und unter Verwendung der bevorzugten Ammoniumhydroxid-Katalysatoren liegt die Katalysatormenge bei weniger als 0,03 Gew.-%, vorzugsweise bei weniger als 0,01 Gew.-% und besonders bevorzugt bei 0,0005 bis 0,005 Gew.-%, bezogen auf eingesetztes HDI.

Die Katalysatoren können lösungsmitteilfrei benutzt werden, sie werden aber bevorzugt in verdünnter Lösung eingesetzt. Geeignete Lösungsmittel sind in den zitierten Veröffentlichungen beschrieben.

Trimerisierungs- und Urethanisierungsreaktion werden vorzugsweise lösemittelfrei durchgeführt, was die Mitverwendung von üblichen Lacklösungsmitteln, beispielsweise von Estern wie Butylacetat oder Ethoxyethylacetat, Ketonen wie Methyl-isobutyl-keton oder Methylethylketon oder Kohlenwasserstoffen wie Xylol bzw. von Gemischen derartiger Lösungsmitteln jedoch nicht ausschließt. Da im Anschluss jedoch nicht umgesetztes Ausgangsdiisocyanat entfernt wird, würde die Mitverwendung derartiger Lösungsmittel lediglich auf einen überflüssigen, zusätzlichen Aufwand hinauslaufen.

Zur Beendigung der Trimerisierungsreaktion wird im allgemeinen der Katalysator thermisch desaktiviert und/oder dem Reaktionsgemisch zur Desaktivierung des Katalysators ein geeignetes Katalysatorgift zugefügt. Geeignete Katalysatorengifte sind insbesondere im Falle der Verwendung der bevorzugten Ammoniumhydroxid-Katalysatoren anorganische Säuren wie Salzsäure, phosphorige Säure oder Phosphorsäure, Sulfonsäuren oder ihre Derivate wie

Methansulfonsäure, p-Toluolsulforisäure, p-Toluolsulfonsäuremethyl- oder -ethylester oder perfluorierte Sulfonsäuren wie beispielsweise Nonafluorbutansulfonsäure. Besonders gut geeignete Desaktivatoren, d.h. Katalysatorengifte sind saure Ester der phosphorigen Säure oder der Phosphorsäure wie beispielsweise Dibutylphosphit, Dibutylphosphat oder Di-(2-ethylhexyl)phosphat, die vorzugsweise in Form einer verdünnten Lösung in HDI eingesetzt werden. Die Desaktivatoren werden dem Reaktionsgemisch im allgemeinen in einer dem Katalysator zumindest äquivalenten Menge zugefügt. Da sich die Katalysatoren jedoch während der Trimerisierungsreaktion teilweise zersetzen können, ist oftmals die Zugabe einer unteräquivalenten Menge des Desaktivators ausreichend. Bei Verwendung von thermisch labilen Katalysatoren, beispielsweise von quaternären Ammoniumhydroxiden mit Hydroxyalkyl-Substituenten am Stickstoff, kann oftmals auch auf die Zugabe eines Katalysatorengifts völlig verzichtet werden, da bei Verwendung derartiger Katalysatoren oftmals ein Abbruch der Reaktion durch kurzzeitiges Erhitzen des Reaktionsgemischs auf oberhalb 100°C liegende Temperaturen ausreicht (thermische Zersetzung, d.h. Desaktivierung des Katalysators).

Andererseits ist zwecks Gewährleistung einer sicheren Abstoppung der Reaktion oftmals auch die Verwendung einer größeren als der äquivalenten Menge, beispielsweise einer doppelt äquivalenten Menge des Desaktivators zweckmäßig. Vorzugsweise wird somit unter Verwendung von Desaktivatoren (Katalysatorengiften) in bis zu 2-fach äquivalenten Mengen, bezogen auf die Menge des eingesetzten Katalysators, gearbeitet.

Bevorzugt ist es neben der Trimerisierung eines Teils der Isocyanatgruppen des Ausgangsdiisocyanats einen weiteren Teil dieser Isocyanatgruppen durch Urethanisierung mit den beispielhaft genannten Diolen zu modifizieren. Hierbei ist es unerheblich, in welcher Reihenfolge Urethanisierung und Trimerisierung erfolgen mit der Einschränkung, dass beide Verfahrensschritte vor Entfernung des überschüssigen Ausgangsdiisocyanats erfolgen sollten. Dies bedeutet, dass die Urethanisierungsreaktion mit dem Diol unter Verbrauch eines Teils der Isocyanatgruppen vor Zugabe des Trimerisierungskatalysators erfolgen kann. Die Urethanisisierung kann auch mit nur einem Teil des überschüssigen Diisocyanats erfolgen und weiteres Diisocyanat kann vor der nachfolgenden Trimerisierunsreaktion noch zugesetzt werden. Urethanisisierung und Trimerisierung können gleichzeitig durchgeführt werden, indem Diol und Trimerisierungskatalysator gleichzeitig, beispielsweise im Gemisch zugesetzt werden. Die Urethanisierung kann beginnen bevor die Trimerisierung ganz abgeschlossen ist, sie kann auch nach abgeschlossener Trimerisierung eingeleitet werden. Das Diol kann auch in Teilmengen zu einem beliebigen Zeitpunkt des Verfahrens zugesetzt werden. Trimerisierung und Urethanisierung sollten abgeschlossen sein, bevor man beginnt, überschüssiges Ausgangsdiisocyanat zu entfernen.

Hinsichtlich der bevorzugten Mengen und Verfahrensausführung sowie weiterer bevorzugter Ausgestaltungen zur Herstellung des Polyisocyanats B) wird auf EP-A-336 205 verwiesen.

Ein bevorzugtes Polyisocyanat B) ist dadurch gekennzeichnet, dass die beim Polyisocyanat B) eingesetzten Polyesterdiole ein mittleres, aus der Hydroxylzahl berechenbares Molekulargewicht von 350 bis 950 g/mol, vorzugsweise 500 bis 800 aufweisen. Es handelt sich in einer bevorzugten Ausführungsform um an sich bekannte Polyesterdiole, die aus Diolen und Dicarbonsäuren aufgebaut sind. Geeignete Diole zur Herstellung der Polyesterdiole sind beispielsweise Dimethylolcyclohexan, Ethandiol, 1,2- und 1,3-Propandiol, 1,2-, 1,3- und 1,4-Butandiol und Neopentylglykol. Bevorzugt sind dessen Gemische mit 1,6-Hexandiol, besonders bevorzugt ist 1,6-Hexandiol als ausschließliche Diolkomponente. Geeignete Dicarbonsäuren sind beispielsweise aromatische Dicarbonsäuren wie Phthalsäure, Isophthalsäure und Terephthalsäure, cycloaliphatische Dicarbonsäuren wie Hexahydrophthalsäure, Tetrahydrophthalsäure, Endomethylentetrahydrophthalsäure bzw. deren Anhydride und aliphatische Dicarbonsäuren, die bevorzugt Verwendung finden, wie Bernsteinsäure, Glutarsäure, Adipinsäure, Korksäure, Azelainsäure und Sebacinsäure oder deren Anhydride.

Beliebige Gemische der beispielhaft genannten Ausgangsmaterialien zur Herstellung der Polyester können ebenfalls eingesetzt werden. Weiterhin ist es möglich, beim erfindungsgemäßen Verfahren Gemische verschiedener Polyester der genannten Art zu verwenden.

Besonders bevorzugt werden jedoch Polyesterdiole aus ε-Caprolacton des genannten Molekulargewichtsbereichs eingesetzt, die in an sich bekannter Weise aus einem Diol der oben beispielhaft genannten Art als Startermolekül und ε-Caprolacton hergestellt worden sind. Hier wird vorzugsweise als Startermolekül 1,6-Hexandiol verwendet.

Ganz besonders bevorzugte Polyesterdiole sind ε-Caprolactondiole, die auf Hexandiol-1,6 gestartet sind und die eine sehr enge Oligomerverteilung aufweisen, was durch Verwendung von Bortrifluorid-Etherat oder organischen Zinnverbindungen als Katalysator bei der Polymerisierung erreicht werden kann. Diese ganz besonders bevorzugten Esterdiole bestehen zu mehr als 50 Gew.-% aus Molekülen in einem Molekulargewichtsbereich von 460 bis 802 g/mol.

Neben diesen erfindungsgemäß zu verwendenden Diolen können auch Estergruppen-freie Diole mitverwendet werden, was aber weniger bevorzugt ist. Also solche kommen z.B.solche des Molekulargewichtsbereichs 62 bis 300 g/mol in Frage wie Ethandiol, 1,3-Butandiol, 2,2,4-Trimethylpentandiol-1,3 und besonders 2-Ethylhexandiol-1,3. Das Molverhältnis von estergruppenfreiem Diol zu Estergruppen enthaltendem Diol kann bis zu 1: 1 betragen.

Bevorzugt ist es, dass das Polyisocyanat A) in einer Menge von 70-98 Gew.-% und das Polyisocyanat B) in einer Menge von 2 bis 30 Gew.-%, jeweils bezogen auf die Summe von A) und B), vorliegt.

Besonders bevorzugt ist es, dass die Mischung die Polyisocyanate A) und B) zu mehr als 90 Gew.-%, insbesondere mehr als 95 Gew.-% enthält.

In einer ebenfalls bevorzugten Ausführungsform sind die Polyisocyanate A) und/oder B) durch den Einbau

monofunktioneller Alkohole und/oder Polydialkylsiloxandiole zusätzlich modifiziert. Dabei ist besonders bevorzugt, wenn die Polyisocyanate A) und B) zusätzlich modifiziert sind.

Insbesondere beträgt der Gehalt an über Urethangruppen chemisch eingebauten Polydimethylsiloxanen 0,5 bis 3 Gew.-%, vorzugsweise 1 bis 2 Gew.-%, bezogen auf die Polyisocyanatharzmischung.

Insbesondere beträgt der Gehalt an über Urethangruppen chemisch eingebauten monofunktionellen Alkoholen 0,1 bis 3 Gew.-%, vorzugsweise 0,1 bis 1,5 Gew.-%, bezogen auf die Polyisocyanatharzmischung.

Für den Einbau besonders geeignete Polydialkylsiloxandiole sind Polydimethylsiloxandiole der allgemeinen Formel

$$HO-(CH_2)_n-Si(CH_3)_2-[OSi(CH_3)_2]_m-(CH_2)_n-OH,$$

in der

n für eine Zahl von 1 bis 4

und

m für eine Zahl von 2 bis 25 stehen.

Es wurde gefunden, dass die erfindungsgemäßen Isocyanatharze analog EP-A-841 358 modifiziert werden können und dass das Eigenschaftsprofil der unter Verwendung derart modifizierter Isocyanatharze lackierten Leder durch diese Modifizierung noch weiter verbessert wird.

Die Erfindung betrifft daher weiterhin ein Verfahren zur Herstellung der erfindungsgemäßen Polyisocyanatharze, wobei die Polyisocyante A) und B) zusätzlich wie oben beschrieben, modifiziert sind, dadurch gekennzeichnet, dass man entsprechend nicht-modifizierte erfindungsgemäße Polyisocyanatharzmischung oder die Polyisocyanate A) und B) jeweils einzeln

a) mit Polydimethylsiloxandiolen oder
b) mit monofunktionellen Alkoholen oder
c) mit Polydimethylsiloxandiolen und monofunktionellen Alkoholen gleichzeitig oder nacheinander, umsetzt und sofern die Modifizierung von A) und B) einzeln erfolgt ist, die modifizierten Isocyanate A) und B) mischt.

Diese Modifizierung kann grundsätzlich durch Einzelumsetzung der oben definierten noch nicht entsprechend modifizierten Harzkomponenten A) und/oder B) mit den Polydimethylsiloxandiolen erfolgen, günstiger ist es jedoch, die Harzkomponenten A) und B) im bevorzugten Mischungsverhältnis - vorteilhaft als Lösung - vorzulegen, das Polydimethylsiloxandiol zuzugeben und bei Normal - oder leicht erhöhter - Temperatur bis zum Ende der Umsetzung zu rühren.

Bevorzugt sind deshalb auch erfindungsgemäße Polyisocyanatharzmischungen, dadurch gekennzeichnet, dass der Gehalt an über Urethangruppen chemisch eingebauten Polydimethylsiloxanen 0,5 bis 3 Gew.-%, vorzugsweise 1 bis 2 Gew.-%, bezogen auf die Polyisocyanatharzmischung, beträgt.

Es wurde weiterhin gefunden, dass monofunktionelle Alkohole, insbesondere primäre, $C_1$ bis $C_{12}$-Alkohole der aliphatischen und araliphatischen Reihe ebenfalls zur Modifizierung der erfindungsgemäßen Polyisocyanatharze eingesetzt werden können. Bei dieser Umsetzung entstehen aus den zu vernichtenden Isocyanatgruppen die entsprechenden Urethangruppen.

Als geeignete Alkohole seien beispielhaft genannt:

Methanol; Ethanol; Propanol; Butanol; Hexanol; 2-Ethylhexanol; Benzylakohol.

Bevorzugt sind rein aliphatische $C_2$ bis $C_6$-Alkohole, besonders bevorzugt ist n-Butanol.

Gegenstand der Erfindung sind deshalb weiterhin erfindungsgemäße Polyisocyanatharze, dadurch gekennzeichnet, dass der Gehalt an über Urethangruppen chemisch eingebauten monofunktionellen Alkoholen 0,1 bis 3 Gew.-%, vorzugsweise 0,1 bis 1,5 Gew.-%, bezogen auf die Polyisocyanatharzmischung, beträgt.

Zur Herstellung der so modifizierten erfindungsgemäßen Harze ist es prinzipiell möglich, die Umsetzung mit den Polydimethylsiloxandiolen und/oder den monofunktionellen Alkoholen mit den Harzkomponenten A) und B) getrennt durchzuführen. Es ist jedoch wesentlich rationeller, die Polyisocyanate A) und B) zunächst im gewünschtem Verhältnis in Lösemitteln zu lösen, zu dieser Lösung das Polydimethylsiloxandiol und/oder den monofunktionellen Alkohol zuzusetzen und dann die Umsetzung bei Normaltemperatur oder leicht erhöhter Temperatur durchzuführen. Als bevorzugte T-Obergrenze der Reaktion gilt der Siedepunkt des verwendeten Lösemittelsystems.

Die Reaktion kann titrimetrisch verfolgt werden, sie ist beendet, wenn der NCO-Gehalt des Systems auf einen konstant bleibenden Wert gefallen ist. Dieser Wert liegt in der Regel geringfügig unter dem berechnetem Wert. Bei ausschließlicher Polydimethylsiloxanmodifizierung ist das Reaktionsende auch dadurch zu erkennen, dass die nach

Zugabe des Polydimethylsiloxandiols eingetrübte Lösung wieder klar geworden ist.

Die Erfindung betrifft weiterhin mit Polydialkylsiloxandiolen und/oder monofunktionellen Alkoholen ausgewählt aus der Gruppe der primären $C_1$-$C_{12}$-Alkohole der aliphatischen und araliphatischen Reihe modifizierte Polyisocyanate B).

Wenn die Polyisocyanatharze mit monofunktionellem Alkohol und Polydimethylsiloxandiol umgesetzt werden sollen, sind zwei Verfahrensvarianten sinnvoll. Man kann einerseits Polydimethylsiloxandiol und monofunktionellen Alkohol gleichzeitig zugeben und bis zum Ende der Umsetzung rühren. Das ist die herstelltechnisch einfachste Verfahrensvariante mit der kürzesten Reaktionszeit.

Aus anwendungstechnischer Sicht ist es aber vorteilhafter, zunächst den monofunktionellen Alkohol umzusetzen und erst danach das Polydimethylsiloxandiol zuzugeben, weil durch diese Verfahrensweise Produkte mit niedrigerer Viskosität erhalten werden.

Grundsätzlich ist es natürlich auch möglich, zuerst das Polydimethylsiloxandiol umzusetzen und danach den monofunktionellen Alkohol.

Die erfindungsgemäßen Polyisocyanatharzmischungen werden vorzugsweise als Formulierung mit wenigstens einem organischen Lösungsmittel eingesetzt.

Geeignete Lösemittel sind Ester, Etherester, Ketone, Dialkylcarbonate, cyclische Carbonate und cyclische Ether sowie Mischungen dieser Lösemittel. Als Verschnittmittel können zusätzlich Alkylaromaten wie Toluol und Xylol mitverwendet werden.

Bevorzugt sind Formulierungen der erfindungsgemäßen Polyisocyanatharze in organischen Lösemitteln, die dadurch gekennzeichnet sind, dass diese Formulierungen einen Harzgehalt von 20 bis 95 Gew.-%, bevorzugt 30 bis 80 Gew.-%; besonders bevorzugt 50 bis 70 Gew.-% aufweisen.

Als besonders geeignete Lösemittel seien beispielsweise genannt:

Ethylacetat, Butylacetat; Isobutylacetat; Methoxypropylacetat; Ethoxyethylpropionat, Propylenglykoldiacetat, Butanon, Cyclohexanon, Diethylcarbonat, Propylencarbonat.

Die Erfindung betrifft weiterhin die Verwendung der erfindungsgemäßen Polyisocyanatharzmischungen als Vernetzer für 2-K-Polyurethanlacke, insbesondere für flexible Substrate, vorzugsweise Leder. Als flexible Substrate können weiterhin Textilien, Kunststofffolien, Papier, Nonwoven usw. genannt werden. Außerdem betrifft die Erfindung ein Verfahren zur Herstellung von beschichteten, insbesondere flexiblen, Substraten. Dies ist vorzugsweise dadurch gekennzeichnet, dass man das erfindungsgemäße Polyisocyanatharzgemisch zusammen mit einem Polyol (2. Komponente des 2-K-Systems) mischt und auf das Substrat aufträgt.

Dieser Auftrag kann durch -vorzugsweise airless- Spritzen erfolgen, am Günstigsten ist jedoch der Gießauftrag. Dazu wird das Isocyanatharz / Polyol Gemisch durch Zugabe von Cosolvens auf eine gewünschte Viskosität gestellt und mit Hilfe einer Gießmaschine auf das Substrat gegossen. Die Auftragsmenge kann in weiten Grenzen schwanken, übliche Auftragsmengen sind 150 bis 300 g Gemisch pro Quadratmeter Substrat. Es ist grundsätzlich auch möglich, das Gemisch zu rakeln.

Bevorzugte Polyole der 2. Komponente sind hydroxylfunktionelle Polyester.

Als bevorzugte hydroxylfunktionelle Polyester sind solche der an sich bekannten und zur Herstellung von Polyurethanen üblicherweise verwendeten Art zu nennen. Sie sind in der Regel aus Dicarbonsäuren und difunktionellen Alkoholen aufgebaut, unter gelegentlicher Mitverwendung verzweigender Komponenten, wie etwa Trimethylolpropan. Zum Aufbau der Polyester einsetzbare Dicarbonsäuren sind $C_2$ bis $C_{12}$-Dicarbonsäuren der aliphatischen und aromatischen Reihe. Bevorzugt wird Adipinsäure und Phthalsäure verwendet.

Auch die difunktionellen Alkohole sind solche der an sich bekannten Art. Es können aliphatische $C_2$ bis $C_{12}$-Diole, aber auch Polyetherdiole eingesetzt werden. Beispielsweise seien genannt: Ethylenglykol, Propylenglykol; Butandiol, Hexandiol; Diethylenglykol; Triethylenglykol, Dipropylenglykol.

Als verzweigende Komponenten seien beispielsweise Glyzerin, Sorbit, Trimethylolpropan genannt.

Die erfindungsgemäßen Harzmischungen geben - kombiniert mit den oben beschriebenen Polyolen - Lacke mit hohem Glanz, angenehmen Griff und ausserordentlich guten Knickechtheiten, insbesonders Kälteknickechtheiten. Das eingesetzte 2K-System hat eine lange Topfzeit und trotzdem eine für die industrielle Verarbeitung optimale Trocknungscharakteristik.

Mit erfindungsgemäss lackierten Substraten gefertigte Artikel - insbesonders Schuhe - sind pflegeleicht, optisch sehr ansprechend und in den physikalischen Echtheiten, insbesonders der Kälteknickechtheit überlegen.

In den folgenden Beispielen wird die Erfindung näher erläutert, ohne dass durch die Beispiele Art und Umfang der Erfindung in irgendeiner Form eingeschränkt werden soll.

**Beispiele**

A) Herstellung der Ausgangspolyisocyanate (nicht erfindungsgemäß):

Urethangruppenhaltiges Polyisocyanat I

In einem Kessel werden 21489 g (123,5 Mol) Toluylendiisocyanat (80 Mol-% 2,4-, 20 Mol-% 2,6-Isomer) vorgelegt und auf 40°C erhitzt. Dazu wird unter Rühren unter Schutzgas (Stickstoff) eine Mischung aus 804 g (6 Mol) Trimethylolpropan und 424 g (4 Mol) Diethylenglykol so zulaufen lassen, dass die Innentemperatur nicht über 60°C steigt. Nach 5 h ist der Zulauf beendet. Es wird noch eine Stunde nachgerührt. Danach ist der NCO-Gehalt des Ansatzes auf 40,86 % gefallen. Es werden 50 g Dibutylphosphat zugegeben und eine weitere Stunde bei 40°C gerührt. Dann wird das überschüssige TDI-Isomerengemisch durch Destillation über einen Kurzwegverdampfer abgetrennt.
Man erhält 5500 g eines viskosen Harzes mit NCO-Gehalt von 17,82 %. Dieses Harz wird in Ethylacetat zu einer 75 %igen Lösung gelöst.
Diese Lösung hat einen NCO-Gehalt von 13,36 % und eine Viskosität von 1600 mPas.
Die gelchromatographische Untersuchung des Harzes ergab folgende Zusammensetzung:

Legende: DEG = Diethylenglykol; TMP = Trimethylolpropan;
TDI = Toluylendiisocyanat

| Produkt | Aufgebaut aus den Komponenten (Mol) | Molenbruch | NCO- Funktionalität |
|---|---|---|---|
| TMP - Trisurethan | TMP : TDI =1 : 3 | 0,5722 | 3 |
| DEG - Bisurethan | DEG : TDI = 1 : 2 | 0,3112 | 2 |
| TMP-DEG-TDI-Oligourethan | TMP : DEG : TDI = 1 : 1 : 4 | 0,0574 | 3 |
| DEG-TDI-Oligourethan | DEG : TDI = 2 : 3 | 0.0276 | 2 |
| TMP-DEG-TDI-Oligourethan | TMP : DEG: TDI = 2 : 1 : 6 | 0,0241 | 4 |
| DEG-TDI-Oligourethan | DEG : TDI = 3 : 4 | 0,0039 | 2 |
| TMP-TDI-Oligourethan | TMP : TDI = 2 : 5 | 0,0036 | 4 |

Die NCO-Funktionalität des Polyisocyanats lässt sich entsprechend der obigen Formel aus der Funktionalität der einzelnen Umsetzungsprodukte und ihrem Molenbruch an der Gesamtmischung berechnen.
Der Molenbruch errechnet sich wiederum einfach aus dem gefundenen Molekulargewicht und der Peakfläche bei der Gelchromatographie.
Aus diesen Daten errechnet sich eine mittlere NCO-Funktionalität des Produkts von: F = 2,685. Dieser Wert liegt nur leicht über der theoretischen NCO-Funktionalität von 2,6.
Aus NCO-Gehalt und NCO-Funktionalität errechnet sich für das Produkt eine mittlere Molmasse (Zahlenmittel) von 633 Dalton.

Isocyanuratgruppenhaltiges Polyisocyanat II

In einem geeignetem Reaktionsgefäß werden 1300 g TDI-Isomerengemisch aus dem obigen Beispiel zusammen mit 2600 g Hexamethylendiisocyanat unter Inertgas (Stickstoff) vorgelegt und auf 60°C erwärmt. Es werden 0,78 g Tri-n-butylphosphan zugefügt. Die Mischung wird gerührt, wobei durch leichte Außenkühlung die Temperatur bei 60°C gehalten wird. Nach 4,5 h ist der NCO-Gehalt des Reaktionsgemischs von anfangs 49,43 % auf 36 % gesunken. Die Reaktion wird durch Zugabe von 0,2 g Schwefelblume gestoppt.
Das Reaktionsprodukt wird nun mit 4 g Dibutylphosphat versetzt und das nicht umgesetzte Monomerengemisch wird dann durch Kurzwegdestillation über einen Fallfilmverdampfer bei 170°C / 2 mbar entfernt.
Es werden 2021 g eines gelblichen Harzes mit einem NCO-Gehalt von 23 % erhalten.
Aus der GC- Analyse des Destillats wird für das erhaltene Mischtrimerisat ein molares TDI / HDI-Einbauverhältnis von 62,6 zu 37,4 bestimmt.
Das Harz wird in Butylacetat zu einer 60 %-igen Lösung gelöst. Es resultieren 3368 g Lösung mit einem NCO-Gehalt von 13,8 % und einer Viskosität von 140 mPas bei 23°C.

Gelchromatographische Untersuchung des Harzes liefert folgendes Resultat:

| Produkt | Aufgebaut aus Komponenten (Mol) | Molenbruch | NCO-Funktionalität |
|---|---|---|---|
| 1-Kern - Trimerisat | 2 TDI + 1 HDI | 0,881 | 3 |
| 2-Kern - Trimerisat | 3 TDI + 2 HDI | 0,0927 | 4 |
| 3-Kern - Trimerisat | 4 TDI + 3 HDI | 0,019 | 5 |
| 4-Kern - Trimerisat | 5 TDI + 4 HDI | 0,0073 | 6 |

Wegen der nahezu identischen Molmassen werden entsprechende 1-Kern; 2-Kern; etc. Trimerisate mit abweichendem TDI / HDI Anteil durch die Gelchromatographie nicht unterschieden und sind deshalb bei der Angabe des Aufbaus nicht getrennt erfasst.

Aus den Daten errechnet sich eine mittlere NCO-Funktionalität des Mischtrimerisats von F = 3,1526. Auch dieser Wert liegt nur unwesentlich über der NCO-Funktionalität von 3 des reinen 1-Kern Trimerisats.

Aus dem NCO-Gehalt des Produkts und seiner NCO-Funktionalität errechnet sich eine mittlere (Zahlenmittel) Molmasse von 576 Dalton.

Polyestermodifiziertes isocyanuratgruppenhaltiges Polyisocyanat III

In einem geeignetem Rührgefäß werden 1596 g (9,5 Mol) HDI mit 650 g (1 Mol) hexandiolgestartetem Polycaprolactondiol (OH-Zahl : 172) vermischt. Es wird 3 h auf 90 bis 100°C erhitzt. Der NCO-Gehalt des Ansatzes ist danach auf 30,7 % gefallen.

Nun wird ein starker Strom von reinem Stickstoff etwa 1 h bei 40°C durch die Flüssigkeit geleitet. Dieser Stickstoffstrom wird während der gesamten weiteren Reaktion aufrecht erhalten. Es werden jetzt 21,9 g einer 0,5 %-igen Lösung von N,N,N-Trimethyl -N-benzylammoniumhydroxid in 2-Ethylhexandiol-1,3 innerhalb eines Zeitraums von 20 Minuten zugetropft. Dann wird auf 65 bis 70°C erhitzt und 2,5 h bei dieser Temperatur gerührt. Danach liegt der NCO-Gehalt der Mischung bei 22,8 %. Es werden nun 0,22 g einer 25 %-igen Lösung von Dibutylphosphat in HDI zugegeben und noch 15 min bei 60°C gerührt. Danach wird überschüssiges HDI durch Destillation in einem Kurzwegverdampfer entfernt.

Es werden 1630 g eines Harzes mit folgenden Kenndaten erhalten:

NCO-Gehalt: 11,85 %; Viskosität: 9500 mPas / 23°C

Das Harz hat einen Polyestergehalt von 39,8 % und einen Isocyanuratgehalt von 10%.

Polyestermodifiziertes isocyanuratgruppenhaltiges Polyisocyanat IV

In einem geeignetem Rührgefäß werden 798 g (4,75 Mol) HDI vorgelegt und auf 50°C erhitzt. Es wird 1 h lang ein starker Stickstoffstrom durchgeleitet. Bei der weiteren Reaktion wird dieser Stickstoffstrom aufrecht erhalten.

Nun werden 3,25 g einer 4 % igen Lösung von N,N,N-Trimethyl -N-(2-hydroxypropyl) -ammoniumhydroxid in 2-Ethylhexanol zugegeben. Dabei steigt die Temperatur auf 60°C an. Es wird 6 h bei dieser Temperatur gerührt. Danach ist der NCO-Gehalt der Mischung auf 41,9 % gefallen. Das Gemisch wird 10 min auf 120°C erhitzt, wobei der Katalysator desaktiviert wird. Nun giesst man 166 g (0,2554 Mol) hexandiolgestartetes Polycaprolactondiol (OH-Zahl: 172) zu der Mischung. Es wird so lange bei 90 bis 100°C gerührt, bis der NCO-Gehalt des Systems auf 32,4 % gefallen ist (5 h).

Danach wird das Produkt durch Dünnschichtdestillation über einen Kurzwegverdampfer vom überschüssigem HDI abgetrennt.

Es werden 450 g eines Harzes mit folgenden Kenndaten erhalten:

NCO-Gehalt: 13,1 %; Viskosität 3000 mPas / 23°C

Das Harz hat einen Polyestergehalt von 36,9 % und einen Isocyanuratgehalt von 14,3 %.

B) Herstellung erfindungsgemäßer Polyisocyanatharzformulierungen

Beispiel B1:

In 700 g der 60 %-igen Lösung des Polyisocyanats II in Butylacetat werden 60 g des Polyisocyanats IV gelöst. Die resultierende Lösung hat einen NCO-Gehalt von 13,744 % und eine Viskosität von 160 mPas bei 23°C. Das Gewichtsverhältnis estergruppenfreier NCO-Komponente zu estergruppenhaltiger NCO-Komponente in der Formulierung beträgt 87,5 zu 12,5.

Beispiel B 2:

Es werden 700 g der Butylacetatlösung von Polyisocyanat II mit 60 g estergruppenhaltigem Polyisocyanat III formuliert. Die Formulierung hat einen NCO-Gehalt von 13,65 % und eine Viskosität von 170 mPas bei 23°C. Das Gewichtsverhältnis estergruppenfreier - zu estergruppenhaltiger NCO-Komponente in der Mischung ist 87,5 zu 12,5.

Beispiel B3:

1000 g der Butylacetatlösung von Polyisocyanat II und 85,7 g des estergruppenhaltigen Polyisocyanats III werden homogen vermischt. In die Mischung werden unter Rühren unter Stickstoffatmosphäre 10g (0,135 Mol) n- Butanol und 20 g (21,765 mMol) eines linearen Polydimethylsiloxandiols mit Si-$(CH_2)_3$-OH Endgruppen gegeben.
Die Reaktionsmischung wird bei 50°C gerührt. Nach 6 h Rührzeit ist die vorher trübe Mischung homogen und klar. Der NCO - Gehalt des Reaktionsprodukts beträgt nun 12,6 %; die Viskosität liegt bei 180 mPas bei 23°C.

Beispiel B4:

Zu 1000 g der Ethylacetatlösung des Polyisocyanats I werden 90 g estergruppenhaltiges Polyisocyanat III, 290 g Methoxypropylacetat und 150 g Isobutylacetat gegeben. Die Mischung wird so lange gerührt, bis eine homogene klare Lösung entstanden ist. Die fertige Mischung hat einen NCO-Gehalt von 9,43 %. Das Gewichtsverhältnis estergruppenfreier zu estergruppenhaltiger NCO-Komponente in der Mischung ist 89,3 zu 10,7.

Beispiel B5:

Das Beispiel B4 wird nachgestellt. Zu der hergestellten Mischung werden 25 g (27,2063 mMol) des auch in Beispiel B3 eingesetzten linearen Polydimethylsiloxandiols gegeben. Es wird wie in Beispiel B3 weitergearbeitet. Das fertige, klare und homogene Reaktionsprodukt hat einen NCO-Gehalt von 9,13 %.

Beispiel B6:

Zu 1000 g der Ethylacetatlösung des Polyisocyanats I werden 90 g des esterhaltigen Polyisocyanats IV, 290 g Methoxypropylacetat und 150 g Isobutylacetat gegeben. Es wird gerührt, bis die Mischung homogen und klar ist.
Das fertige Produkt hat einen NCO-Gehalt von 9,5 %.

C) Anwendungstechnische Versuche; allgemeine Angaben

Herstellung der grundierten Leder:

Auf der Narbenseite angeschliffene Rindleder der Stärke 1,1 mm werden mit einem handelsüblichem (Primal Prebottom VE) sehr weichem (Shore A 25) gut eindringendem wässrigen Polyacrylatlatex imprägniert. Durch Zusatz eines Penetrationshilfsmittels wird sichergestellt, daß der Latex komplett in das Leder eindringt und keine Reste an der Lederoberfläche verbleiben. Die imprägnierten Leder werden getrocknet. Danach wird die Narbenseite erneut geschliffen. Auf die so vorbereiteten Leder wird mit einer Druckmaschine eine Mischung aus 800 Teilen eines handelsüblichen wässrigen sehr weichen, durch Silikat trockengestellten Polyurethan/Polyacrylat Latex des Festkörpergehalts 28 % (BAYGEN Fondo compatto AP) und 200 Teilen einer wässrigen Rußformulierung (Feststoffgehalt 28 %; Rußgehalt 13 %) so aufgetragen, dass pro Auftrag eine Auflage (nass) von 10 g pro Quadratfuß resultiert. Es werden insgesamt drei Aufträge aufgebracht, wobei nach jedem Auftrag kurz zwischengetrocknet wird. Danach werden die Leder hydraulisch gebügelt (200 bar, 3 bis 4 sec; 70 bis 80°C).
Für alle anwendungstechnischen Versuche werden ausschließlich diese Leder eingesetzt.
Für die Lackierversuche eingesetzte hydroxylfunktionelle Weichharze (Lackpolyester):

Weichharz 1:

600 Teile eines linearen Polyesterdiols (OH-Zahl: 42) aus Adipinsäure und Diethylenglykol und 100 Teile eines verzweigten Polyesters aus Adipinsäure, Phthalsäure, Propylenglykol und Trimethylolpropan (OH-Zahl: 165; OH-Funktionalität: 2,8) werden gemischt und mit Isobutylacetat zu einer 70 %-igen Formulierung gelöst.

Weichharz 2:

Eine Mischung aus 850 Teilen eines linearen Polyesterdiols aus Adipinsäure und Diethylenglykol (OH-Zahl: 42) und 88 Teilen eines linearen Polyesterdiols aus Phthalsäure und Ethylenglykol (OH-Zahl: 281) wird mit 100 Teilen Toluylendiisocyanat (Isomerengemisch, enthaltend 80 % des 2.4-Isomeren und 20 % des 2,6-Isomeren) zum OH-endständigem Oligourethan umgesetzt. Das Reaktionsprodukt wird mit einem 1:1-Lösemittelgemisch aus Ethylacetat und Methoxypropylacetat zu einer Lösung, enthaltend 57 % Oligourethan formuliert.

Zur Herstellung eines technisch brauchbaren Lacks auf Leder benötigt 1 kg Weichharz 1 ein NCO-Angebot von 63 g; bei Weichharz 2 werden pro kg 46,5 g NCO benötigt.

<u>Lackierung:</u>

A) Herstellung der Lackansätze:

Das entsprechende Weichharz wird mit der jeweils eingesetzten Polyisocyanatharzformulierung der Beispiele B1 bis B6 vermischt. Die Menge des Polyisocyanats wird dabei jeweils so bemessen, dass der oben für die Weichharze angegebene NCO-Bedarf erreicht wird.

Die erhaltenen Mischungen sind für den Einsatz zu viskos. Sie werden deshalb durch Verdünnen mit einer Ethylacetat/Butylacetat/Cyclohexanon-Mischung (Mischungsverhältnis: 1,6:1:1) auf eine Auslaufviskosität (DIN 53 211) von 25 sec (DIN-Becher, 4 mm-Düse) eingestellt.

B) Lackierung:

Der jeweilige Lackansatz wird mit Hilfe einer Laborgießmaschine in einer Menge von 18 g Ansatz pro Quadratfuß auf die grundierten Leder gegossen. Die Leder werden bei 40°C und 40 % relativer Luftfeuchtigkeit in einem staubfreiem, gut ventiliertem Raum über 12 - 14 h getrocknet.

C) Beurteilung und Prüfung:

Direkt nach Entnahme aus dem Trockenraum werden die lackierten Leder auf Griff, Glanz, Fülle, Kantenabdruckfestigkeit und Stapelklebrigkeit beurteilt.

Das Knickbruchverhalten wird mit einem Bally-Flexometer gemäß DIN 53 351 gemessen. Zur Bestimmung des Knickbruchverhaltens bei von Raumtemperatur abweichenden Temperaturen wird ein Bally-Flexometer eingesetzt, welches sich in einer Kühltruhe bei der entsprechenden Temperatur befindet. Die Lederprüflinge werden zuerst 24 h bei 23°C/65 % relativer Feuchte konditioniert und dann vor der Einspannung in das Flexometer 3 h bei Prüftemperatur gelagert.

Anwendungstechnische Beispiele C1 bis C12

Gemäß den allgemeinen Angaben werden die erfindungsgemäßen Polyisocyanatharze der Beispiele B1 bis B6 mit den Weichharzen 1 und 2 kombiniert und entsprechende Lackleder hergestellt. Die entsprechenden Kombinationen sind untenstehender Tabelle zu entnehmen.

Beurteilung und physikalische Echtheitsprüfung lieferte folgende Resultate:

1) Alle Lackleder der Beispiele C1 bis C12 sind in Griff, Glanz, Fülle, Kantenab- druckfestigkeit und Stapelklebrigkeit in Ordnung.

2) Alle Lackleder der Beispiele C1 bis C12 geben 50 000 Trockenknickungen und 20 000 Nassknickungen ohne Beschädigung und entsprechen damit auch hier den technischen Anforderungen.

3) Die nachfolgende Tabelle gibt die Resultate der Kälteknickuntersuchungen an. Der Tabelle ist auch die Zuordnung der Beispiele C1 bis C12 zu entnehmen. Es wurden Knickprüfungen bis maximal 20 000 Knickungen durchgeführt.

Für jedes Beispiel wurden bei jeder Prüftemperatur so viele Prüflinge in das Flexometer eingespannt, dass eine Beurteilung alle 2500 Knickungen möglich ist, ohne den Knickversuch zu unterbrechen. Angegeben ist jeweils die Anzahl von Knickungen, die ohne Beschädigung erreicht wurden. Das bedeutet für einen angegebenen Wert X: bei X -2500 war der Prüfling auch in Ordnung; bei X+2500 war der Prüfling beschädigt. Wenn schon bei 2 500 Knickungen eine Beschädigung sichtbar war, ist < 2 500 angegeben.

| Beispiel Nr. | C1 | C2 | C3 | C4 | C5 | C6 | C7 | C8 | C9 | C10 | C11 | C12 |
|---|---|---|---|---|---|---|---|---|---|---|---|---|
| Isocyanat aus Beispiel | B1 | B2 | B3 | B4 | B5 | B6 | B1 | B2 | B3 | B4 | B5 | B6 |
| Weichharz Nr. | 1 | 1 | 1 | 1 | 1 | 1 | 2 | 2 | 2 | 2 | 2 | 2 |
| K-Knick. + 5°C | 17500 | 17500 | 20000 | 20000 | 20000 | 20000 | 17500 | 20000 | 20000 | 20000 | 20000 | 20000 |
| K-Knick. 0°C | 10000 | 10000 | 12500 | 15000 | 17500 | 15000 | 12500 | 12500 | 12500 | 15000 | 17500 | 15000 |
| K-Knick. -5°C | 2500 | 2500 | 5000 | 10000 | 12500 | 7500 | 5000 | 5000 | 7500 | 12500 | 15000 | 10000 |
| K-Knick -10°C | <2500 | <2500 | 2500 | 5000 | 7500 | 5000 | 2500 | 5000 | 5000 | 7500 | 12500 | 7500 |

Vergleichsbeispiele (nicht erfindungsgemäß):

1) Mit den Weichharzen 1 und 2 und Polyisocyanat I als Vernetzer wurden wie beschrieben Lackansätze gefertigt. Mit den beiden Lackansätzen wurden die auch für die erfindungsgemäßen Beispiele verwendeten grundierten Leder lackiert. Nach Trocknung wurden diese Leder auf Knickechtheit untersucht.

2) Die Flexometerprüfung gab folgendes Resultat:

A) Lack mit Weichharz 1:

Trockenknickung 50 000 in Ordnung; Nassknickung 20 000 in Ordnung; Kälteknickungen: <2 500 (-10°C); 2 500 (-5°C); 5000 (0°C); 12 500 (+ 5°C)

B) Lack mit Weichharz 2:

Trocken-und Nassknickungen bei 50 000 bzw. 20 000 in Ordnung; Kälteknickungen: < 2 500 (-10°C); < 2 500 (-5°C); 5 000 (0°C); 15 000 (+5°C)

Der direkte Vergleich der Resultate von A) mit Beispiel C4 und der Resultate von B) mit Beispiel C10 belegt klar den Vorteil der erfindungsgemäßen Polyisocyanatharze.

3) Versuch der Lackierung von Leder unter ausschließlicher Verwendung des Polyester-modifizierten polyisocyanurathaltigen Polyisocyanats III. Gemäß der Lackiervorschrift wurde mit Weichharz 1 und Polyisocyanat III ein Lackansatz gefertigt, auf Gießviskosität gestellt und mit einer Auflage von 18 g Ansatz pro Quadratfuß gegossen.
Der Lack war nach Trocknung noch so klebrig, dass er Fäden zog. Selbst nach einer Liegezeit von drei Tagen war noch keine Aushärtung eingetreten.

Dieses Resultat belegt, dass die polyestermodifizierten Polyisocyanurat-haltigen Polyisocyanatharze der EP 0336 205 B 1 in der Lackierung von Leder als solche nicht einsetzbar sind.

## Patentansprüche

**1.** Polyisocyanatharzmischung, enthaltend

A) wenigstens ein urethan- und/oder isocyanurathaltiges, Estergruppen-freies Polyisocyanat enthaltend aromatisch und gegebenenfalls aliphatisch gebundene NCO-Gruppen mit

- einem NCO-Gehalt von 10-30 Gew.-%, bevorzugt 15-25 Gew.-% bezogen auf das Polyisocyanat A),
- einer mittleren NCO-Funktionalität von größer gleich 2,1 und
- einer mittleren Molmasse (Zahlenmittel) <800 g/mol und

B) wenigstens ein polyestermodifiziertes, isocyanuratgruppenhaltiges Polyisocyanat mit ausschließlich aliphatisch gebundenen NCO-Gruppen und Isocyanuratgruppen mit

- einem NCO-Gehalt von 7-18 Gew.-%, bevorzugt 10-15 Gew.-% bezogen auf das Polyisocyanat B),
- einem Isocyanuratgehalt (M = 126) von 8-20 Gew.-%, bevorzugt 9-15 Gew.-% bezogen auf das Polyisocyanat B),
- einem Polyestergehalt (gerechnet als Polyesterdiol) von 30 bis 50 Gew.-%, bevorzugt 35 - 45 Gew.-% bezogen auf das Polyisocyanat B),

wobei das zugrundeliegende Polyesterdiol eine mittlere Molmasse (Zahlenmittel) von 350-950 g/mol besitzt und aufgebaut ist aus

a) $C_2$-$C_{12}$-Dicarbonsäuren und/oder -Hydroxycarbonsäuren bzw. deren Anhydriden und/oder inneren Estern; vorzugsweise Adipinsäure und/oder epsilon- Hydroxycapronsäure und
b) Diolen mit einer Molmasse von 62-300 g/mol, vorzugsweise 1,6-Hexandiol,

besonders bevorzugt aufgebaut aus Hexandiol und ε-Caprolacton.

2. Polyisocyanatharze nach Anspruch 1, **dadurch gekennzeichnet, dass** das Polyisocyanat B) unter Verwendung von Hexamethylendiisocyanat (HDI) gegebenenfalls zusammen mit weiteren aliphatischen und/oder cycloaliphatischen Diisocyanaten, wobei der Anteil an HDI vorzugsweise mehr als 30 mol-%, bezogen auf die Gesamtmenge an Diisocyanat beträgt, hergestellt wird.

3. Polyisocyanatharze nach wenigstens einem der Ansprüche 1 bis 2, **dadurch gekennzeichnet, dass** das Polyisocyanat A) in einer Menge von 70-98 Gew.-% und das Polyisocyanat B) in einer Menge von 2 bis 30 Gew.-%, jeweils bezogen auf die Summe von A) und B), vorliegt.

4. Polyisocyanatharze nach wenigstens einem der Ansprüche 1 bis 3, **dadurch gekennzeichnet, dass** zur Herstellung des Polyisocyanats B) zusätzlich zum Polyesterdiol Estergruppen-freie Diole mit einer Molmasse von 62-300 g/mol im Mol-Verhältnis zum Polyesterdiol von bis zu 1: 1 eingesetzt werden.

5. Polyisocyanatharze nach wenigstens einem der Ansprüche 1 bis 4, **dadurch gekennzeichnet, dass** die Polyisocyanate A) und/oder B) durch den Einbau monofunktioneller Alkohole und/oder Polydialkylsiloxandiole zusätzlich modifiziert sind.

6. Polyisocyanatharze nach Anspruch 5, **dadurch gekennzeichnet, dass** die Polyisocyanate A) und B) zusätzlich modifiziert sind.

7. Polyisocyanatharze gemäß Anspruch 5 oder 6, **dadurch gekennzeichnet, dass** der Gehalt an über Urethangruppen chemisch eingebauten Polydimethylsiloxanen 0,5 bis 3 Gew.-%, vorzugsweise 1 bis 2 Gew.-%, bezogen auf die Polyisocyanatharzmischung beträgt.

8. Polyisocyanatharze gemäß wenigstens einem der Ansprüche 5 bis 7, **dadurch gekennzeichnet, dass** der Gehalt an über Urethangruppen chemisch eingebauten monofunktionellen Alkoholen 0,1 bis 3 Gew.-%, vorzugsweise 0,1 bis 1,5 Gew.-%, bezogen auf die Polyisocyanatharzmischung, beträgt.

9. Formulierungen enthaltend wenigstens ein organisches Lösungsmittel und eine Polyisocyanatharzmischung gemäß Anspruch 1.

10. Verfahren zur Herstellung von Polyisocyanatharzen gemäß Anspruch 6, **dadurch gekennzeichnet, dass** man entsprechend nicht-modifizierte Polyisocyanatharze A) und B) nach Anspruch 1 oder die Polyisocyanate A) und B) jeweils einzeln

    a) mit Polydimethylsiloxandiole oder
    b) mit monofunktionelle Alkoholen oder
    c) mit Polydimethylsiloxandiolen und monofunktionellen Alkoholen

    gleichzeitig oder nacheinander, umsetzt und sofern die Modifizierung von A) und B) einzeln erfolgt ist, die modifizierten Isocyanate A) und B) mischt.

11. Verwendung der Polyisocyanatharzmischungen gemäß wenigstens einem der Ansprüche 1 bis 8 als Vernetzer für 2-K-Polyurethanlacke, insbesondere für flexible Substrate vorzugsweise Leder.

12. Flexible Substrate mit einer Beschichtung, die unter Verwendung eines Vernetzers gemäß Anspruch 1 erhalten wurde.

13. Verfahren zur Herstellung von beschichteten, insbesondere flexiblen Substraten, bevorzugt beschichtetem Leder, **dadurch gekennzeichnet, dass** man das Polyisocyanatharzgemisch gemäß Anspruch 1 zusammen mit einem Polyol mischt und auf das Substrat aufträgt.

14. Polyisocyanate, die durch den Einbau monofunktioneller Alkohole ausgewählt aus der Gruppe der primären $C_1$-$C_{12}$-Alkohole der aliphatischen und araliphatischen Reihe und/oder Polydialkylsiloxandiolen modifiziert sind, polyestermodifiziert und isocyanuratgruppenhaltig sind, ausschließlich aliphatisch gebundene NCO-Gruppen und Isocyanuratgruppen enthalten und

- einem NCO-Gehalt von 7-18 Gew.-%, bevorzugt 10-15 Gew.-% bezogen auf das Polyisocyanat
- einem Isocyanuratgehalt (M = 126) von 8-20 Gew.-%, bevorzugt 9 bis 15 Gew.-% bezogen auf das Polyisocyanat
- einem Polyestergehalt (gerechnet als Polyesterdiol) von 30 bis 50 Gew.-%, bevorzugt 35 - 45 Gew.%, bezogen auf das Polyisocyanat aufweisen

wobei das zugrundeliegende Polyesterdiol eine mittlere Molmasse (Zahlenmittel) von 350-950 g/mol besitzt und aufgebaut ist aus

a) $C_2$-$C_{12}$-Dicarbonsäuren und/oder Hydroxycarbonsäuren; bzw. deren Anhydriden und/oder inneren Estern, vorzugsweise Adipinsäure und/oder epsilon - Hydroxycapronsäure und
b) Diolen mit einer Molmasse von 62-300 g/mol, vorzugsweise 1,6-Hexandiol,

besonders bevorzugt aufgebaut aus Hexandiol und epsilon-Caprolacton.

## Claims

1. Polyisocyanate resin mixture containing

A) at least one urethane- and/or isocyanurate-containing polyisocyanate free of ester groups and containing aromatically bonded and optionally aliphatically bonded NCO groups, having

- an NCO content of 10-30% by weight, preferably 15 - 25% by weight, based on the polyisocyanate A)
- an average NCO functionality of greater than or equal to 2.1 and
- an average molar mass (number average) of < 800 g/mol, and

B) at least one polyester-modified polyisocyanate containing isocyanurate groups and having exclusively aliphatically bonded NCO groups and isocyanurate groups, having

- an NCO content of 7-18% by weight, preferably 10 - 15% by weight, based on the polyisocyanate B),
- an isocyanurate content (M = 126) of 8-20% by weight, preferably 9 -15% by weight, based on the polyisocyanate B),
- a polyester content (calculated as polyesterdiol) of 30 to 50% by weight, preferably 35 - 45% by weight, based on the polyisocyanate B),

the parent polyesterdiol having an average molar mass (number average) of 350-950 g/mol and being composed of

a) $C_2$-$C_{12}$-dicarboxylic acids and/or $C_2$-$C_{12}$-hydroxycarboxylic acids; or their anhydrides and/or internal esters; preferably adipic acid and/or epsilon-hydroxycaproic acid, and
b) diols having a molar mass of 62-300 g/mol, preferably 1,6-hexanediol,

particularly preferably composed of hexanediol and ε-caprolactone.

2. Polyisocyanate resins according to Claim 1, **characterized in that** the polyisocyanate B) is prepared using hexamethylene diisocyanate (HDI), optionally together with further aliphatic and/or cycloaliphatic diisocyanates, the amount of HDI preferably being more than 30 mol%, based on the total amount of diisocyanate.

3. Polyisocyanate resins according to at least one of Claims 1 and 2, **characterized in that** the polyisocyanate A) is present in an amount of 70-98% by weight and the polyisocyanate B) in an amount of 2 to 30% by weight, based in each case on the sum of A) and B).

4. Polyisocyanate resins according to at least one of Claims 1 to 3, **characterized in that** diols free of ester groups and having a molar mass of 62-300 g/mol are used for the preparation of the polyisocyanate B), in addition to the polyesterdiol, in the molar ratio to the polyesterdiol of up to 1:1.

5. Polyisocyanate resins according to at least one of Claims 1 to 4, **characterized in that** the polyisocyanates A) and/or B) are additionally modified by the incorporation of monofunctional alcohols and/or polydialkylsiloxanediols.

**6.** Polyisocyanate resins according to Claim 5, **characterized in that** the polyisocyanates A) and B) are additionally modified.

**7.** Polyisocyanate resins according to Claim 5 or 6, **characterized in that** the content of polydimethylsiloxanes chemically incorporated via urethane groups is 0.5 to 3% by weight, preferably 1 to 2% by weight, based on the polyisocyanate resin mixture.

**8.** Polyisocyanate resins according to at least one of Claims 5 to 7, **characterized in that** the content of monofunctional alcohols chemically incorporated by urethane groups is 0.1 to 3% by weight, preferably 0.1 to 1.5% by weight, based on the polyisocyanate resin mixture.

**9.** Formulations comprising at least one organic solvent and a polyisocyanate resin mixture according to Claim 1.

**10.** Process for the preparation of polyisocyanate resins according to Claim 6, **characterized in that** appropriately unmodified polyisocyanate resins A) and B) according to Claim 1 or the polyisocyanates A) and B), in each case individually, are reacted, simultaneously or in succession,

a) with polydimethylsiloxanediols or
b) with monofunctional alcohols or
c) with polydimethylsiloxanediols and monofunctional alcohols

and, if the modification of A) and B) is effected individually, the modified isocyanates A) and B) are mixed.

**11.** Use of the polyisocyanate resin mixtures according to at least one of Claims 1 to 8 as a crosslinking agent for 2-component polyurethane lacquers, in particular for flexible substrates, preferably leather.

**12.** Flexible substrates having a coating which was obtained using a crosslinking agent according to Claim 1.

**13.** Process for the production of coated, in particular flexible substrates, preferably coated leather, **characterized in that** the polyisocyanate resin mixture according to claim 1 is mixed together with a polyol and applied to the substrate.

**14.** Polyisocyanates which are modified by the incorporation of monofunctional alcohols, selected from the group consisting of the primary $C_1$-$C_{12}$-alcohols of the aliphatic and araliphatic series, and/or polydialkylsiloxanediols, are polyester-modified, contain isocyanurate groups, contain exclusively aliphatically bonded NCO groups and isocyanurate groups and have

- an NCO content of 7-18% by weight, preferably 10 - 15% by weight, based on the polyisocyanate,
- an isocyanurate content (M = 126) of 8-20% by weight, preferably 9 to 15% by weight, based on the polyisocyanate,
- a polyester content (calculated as polyesterdiol) of 30 to 50% by weight, preferably 35 - 45% by weight, based on the polyisocyanate,

the parent polyesterdiol having an average molar mass (number average) of 350-950 g/mol and being composed of

a) $C_2$-$C_{12}$-dicarboxylic acids and/or hydroxycarboxylic acids or their anhydrides and/or their esters, preferably adipic acid and/or epsilon-hydroxycaproic acid, and
b) diols having a molar mass of 62-300 g/mol, preferably 1,6-hexanediol,

particularly preferably composed of hexanediol and epsilon-caprolactone.

## Revendications

**1.** Mélange de résines de polyisocyanates comprenant

A) au moins un polyisocyanate renfermant des groupes uréthane et/ou isocyanurate, exempt de groupes ester et renfermant des groupes NCO à liaison aromatique et éventuellement à liaison aliphatique, présentant

- une teneur en NCO de 10 à 30 % en poids, de préférence de 15 à 25 % en poids, par rapport au polyisocyanate A),
- une fonctionnalité NCO moyenne supérieure à 2,1, et
- une masse molaire moyenne (moyenne en nombre) inférieure à 800 g/mol, et

B) au moins un polyisocyanate polyester-modifié, renfermant des groupes isocyanurate, avec des groupes NCO à liaison exclusivement aliphatique et des groupes isocyanurate, présentant

- une teneur en NCO de 7 à 18 % en poids, de préférence de 10 à 15 % en poids, par rapport au polyisocyanate B),
- une teneur en isocyanurate (M = 126) de 8 à 20 % en poids, de préférence de 9 à 15 % en poids, par rapport au polyisocyanate B),
- une teneur en polyester (calculée en tant que polyester-diol) de 30 à 50 % en poids, de préférence de 35 à 45 % en poids, par rapport au polyisocyanate B),

où le polyester-diol de base présente une masse molaire moyenne (moyenne en nombre) de 350 à 950 g/mol et est composé

a) des acides $C_2$-$C_{12}$-dicarboxyliques et/ou des acides $C_2$-$C_{12}$-hydroxycarboxyliques ou leurs anhydrides et/ou leurs esters internes ; de préférence l'acide adipique et/ou l'acide epsilon-hydroxycaproïque, et
b) des dioles présentant une masse molaire de 62 à 300 g/mol, de préférence le 1,6-hexanediol,

particulièrement préférablement composés d'hexanediol et de ε-caprolactone.

**2.** Résines de polyisocyanates selon la revendication 1, **caractérisées en ce que** le polyisocyanate B) est préparé en utilisant du diisocyanate d'hexaméthylène (HDI), éventuellement conjointement avec des diisocyanates aliphatiques et/ou cycloaliphatiques supplémentaires, où la proportion de HDI est de préférence supérieure à 30 % en moles, par rapport à la quantité totale de diisocyanate.

**3.** Résines de polyisocyanates selon au moins l'une des revendications 1 à 2, **caractérisées en ce que** le polyisocyanate A) est présent en une quantité de 70 à 98 % en poids, et le polyisocyanate B) est présent en une quantité de 2 à 30 % en poids, dans chaque cas par rapport à la somme de A) et de B).

**4.** Résines de polyisocyanates selon au moins l'une des revendications 1 à 3, **caractérisées en ce que** des diols exempts de groupes ester, présentant une masse molaire de 62 à 300 g/mol sont utilisés pour la préparation du polyisocyanate B), en plus du polyester-diol, en un rapport molaire sur le polyester-diol allant jusqu'à 1 : 1.

**5.** Résines de polyisocyanates selon au moins l'une des revendications 1 à 4, **caractérisées en ce que** les polyisocyanates A) et/ou B) sont en outre modifiés par l'incorporation d'alcools monofonctionnels et/ou de polydialkylsiloxanediols.

**6.** Résines de polyisocyanates selon la revendication 5, **caractérisées en ce que** les polyisocyanates A) et B) sont en outre modifiés.

**7.** Résines de polyisocyanates selon la revendication 5 ou 6, **caractérisées en ce que** la teneur en polydiméthylsiloxanes incorporés chimiquement par l'intermédiaire de groupes uréthane est de 0,5 à 3 % en poids, de préférence de 1 à 2 % en poids, par rapport au mélange de résines de polyisocyanates.

**8.** Résines de polyisocyanates selon au moins l'une des revendications 5 à 7, **caractérisées en ce que** la teneur en alcools monofonctionnels incorporés chimiquement par l'intermédiaire de groupes uréthane est de 0,1 à 3 % en poids, de préférence de 0,1 à 1,5 % en poids, par rapport au mélange de résines de polyisocyanates.

**9.** Formulations comprenant au moins un solvant organique et un mélange de résines de polyisocyanates selon la revendication 1.

**10.** Procédé de préparation de résines de polyisocyanates selon la revendication 6, **caractérisé en ce que** des résines de polyisocyanates A) et B), non modifiées de façon appropriée, selon la revendication 1, ou les polyisocyanates A) et B), dans chaque cas individuellement, sont mis à réagir, simultanément ou successivement,

a) avec des polydiméthylsiloxane-diols ou
b) avec des alcools monofonctionnels ou
c) avec des polydiméthylsiloxane-diols et des alcools monofonctionnels,

et si la modification de A) et de B) est effectuée individuellement, les isocyanates modifiés A) et B) sont mélangés.

**11.** Utilisation des mélanges de résines de polyisocyanates selon au moins l'une des revendications 1 à 8 en tant qu'agents de réticulation pour des vernis de polyuréthanes à 2 composantes, en particulier pour des substrats flexibles, de préférence le cuir.

**12.** Substrat flexible présentant un revêtement qui a été obtenu en utilisant un agent de réticulation selon la revendication 1.

**13.** Procédé de production de substrats revêtus, en particulier flexibles, de préférence du cuir revêtu, **caractérisé en ce que** le mélange de résines de polyisocyanates selon la revendication 1 est mélangé conjointement avec un polyol et appliqué sur le substrat.

**14.** Polyisocyanates qui sont modifiés par l'incorporation d'alcools monofonctionnels choisis parmi le groupe constitué d'alcools en $C_1$-$C_{12}$ primaires des séries aliphatiques et araliphatiques et/ou de polydialkylsiloxane-diols, sont polyester-modifiés, renferment des groupes isocyanurate, et renferment des groupes NCO à liaison exclusivement aliphatique et des groupes isocyanurate, et présentent

- une teneur en NCO de 7 à 18 % en poids, de préférence de 10 à 15 % en poids, par rapport au polyisocyanate,
- une teneur en isocyanurate (M = 126) de 8 à 20 % en poids, de préférence de 9 à 15 % en poids, par rapport au polyisocyanate,
- une teneur en polyester (calculée en tant que polyester-diol) de 30 à 50 % en poids, de préférence de 35 à 45 % en poids, par rapport au polyisocyanate,

où le polyester-diol de base présente une masse molaire moyenne (moyenne en nombre) de 350 à 950 g/mol et est composé de

a) des acides $C_2$-$C_{12}$-dicarboxyliques et/ou des acides $C_2$-$C_{12}$-hydroxycarboxyliques ou leurs anhydrides et/ou leurs esters internes ; de préférence l'acide adipique et/ou l'acide epsilon-hydroxycaproïque, et
b) des dioles présentant une masse molaire de 62 à 300 g/mol, de préférence le 1,6-hexanediol,

particulièrement préférablement composés d'hexanediol et de ε-caprolactone.